# EUROPÄISCHE PATENTSCHRIFT

(11) **EP 0 690 254 B1**
(45) Veröffentlichungstag und Bekanntmachung des Hinweises auf die Patenterteilung: **04.11.1998**
(21) Anmeldenummer: 94110242.8
(22) Anmeldetag: 01.07.1994
(51) Int. Cl.: F16K 7/07

(54) **Schlauchquetschventil**
Pinch valve
Robinet à manchon déformable

(43) Veröffentlichungstag der Anmeldung: 03.01.1996
(73) Patentinhaber: HO-Matic AG, CH-8910 Affoltern am Albis (CH)
(72) Erfinder: Hohermuth, Kurt, CH-8820 Wädenswil (CH)
(74) Vertreter: Patentanwälte Schaad, Balass, Menzl & Partner AG

(56) Entgegenhaltungen:
- CH-A- 321 639
- DE-A- 2 616 045
- DE-A- 3 221 225
- US-A- 4 125 125

## Beschreibung

Die vorliegende Erfindung betrifft ein Quetschventil gemäss dem Oberbegriff des Anspruchs 1.

Ein Quetschventil dieser Art ist in der DE-A-26 16 045 offenbart. Dieses weist ein Ventilgehäuse auf, dessen Durchlass von einer Manschette aus elastischem Material durchgriffen ist. In den beiden Endbereichen des Durchlasses sind am Ventilgehäuse, in radialer Richtung gegen innen offene, umlaufende Haltenuten angebracht. Bei der Montage werden in die Manschette Spannringe eingesetzt, die dann aufgeweitet werden, um die Manschette am Ventilgehäuse zu befestigen und dazu Teile der Manschette in die Haltenuten hinein zu verdrängen. Das Aufweiten der, in ungespanntem Zustand in Umfangsrichtung gesehen einander überlappende Endbereiche aufweisenden Spannringe bis in gespanntem Zustand die Enden gegeneinander stossen, dürfte nur mit speziellen Werkzeugen möglich sein, da ja nicht nur die Spannringe aufzuweiten, sondern gleichzeitig auch die Manschette zusammenzudrücken ist. Auch die Demontage der Spannringe, beispielsweise zum Auswechseln der Manschette, dürfte mit ähnlichen Problemen verbunden sein.

Ein weiteres Quetschventil der gattungsbildenden Art ist in der CH-Patentschrift Nr. 321 639 offenbart. Die Manschette besteht aus einem Manschettenkörper und an dessen beiden Enden angebrachten Flanschteilen. Weiter ist die Manschette von zwei Ringmuttern umgriffen, die dazu bestimmt sind, je einen Flanschteil an einem zugeordneten Rohrteil zu befestigen. Die Rohrteile ihrerseits sind mit Flanschen versehen, die in den beiden Endbereichen eines rohrartigen Ventilgehäuses angeordnet sind. Von auf die Flansche aufgeschraubten Ringen gehaltene Packungen sorgen für druckdichte Verbindung zwischen den Flanschen und dem Ventilgehäuse, wobei auf das Ventilgehäuse aufgeschraubte Flansche auf die Ringe drücken und diese starr mit dem Ventilgehäuse zusammenhalten.

Ein weiteres Quetschventil ist in der US-Patentschrift Nr. 4,125,125 offenbart. Das Ventilgehäuse ist im wesentlichen kubisch ausgebildet, wobei zwei einander gegenüberliegende Wände als Einlass bzw. Auslass ausgebildet sind. Auf einer der verbleibenden Seiten weist das Ventilgehäuse eine mit einem wegnehmbaren Deckel verschlossene Öffnung auf. Durch diese Öffnung ist der an seinen beiden Enden mit angeformten Aussenflanschen versehene Manschettenkörper in das Ventilgehäuse einführbar. Der Manschettenkörper ist von einer rohrartigen Schrauben-Mutter-Anordnung umgriffen, um die Aussenflansche des Manschettenkörpers lösbar gegen die den Einlass bzw. Auslass aufweisenden Wände zu pressen.

Es ist deshalb eine Aufgabe der vorliegenden Erfindung, ein gattungsgemässes Quetschventil zu schaffen, das bei einfachem Aufbau die leichte Montage und die Auswechselbarkeit der Manschette vor Ort, ohne das Erfordernis von Spezialwerkzeugen, ermöglicht.

Diese Aufgabe wird durch ein gattungsgemässes Quetschventil gelöst, das die Merkmale im Kennzeichen des Anspruchs 1 aufweist.

Erfindungsgemäss ist der Manschettenkörper einerseits über eine Renkverbindung und andererseits über eine Stützanordnung am Ventilgehäuse befestigt. Dies erlaubt das Einführen der Manschette in das Ventilgehäuse und das Erzeugen der Verbindung alleine durch Verdrehen oder Verschieben der Manschette bezüglich dem Ventilgehäuse. Die Befestigung kann somit ohne Werkzeuge einfach und schnell hergestellt und auch wieder gelöst werden. Das Ventilgehäuse kann einteilig ausgebildet sein und das Quetschventil benötigt keine weiteren, mit dem Medium in Berührung kommenden Teile als den Manschettenkörper. Es können somit jegliche Verengungen des Strömungsquerschnitts vermieden werden. Da das Quetschventil einzig ein einteiliges Ventilgehäuse und eine Manschette aufweisen kann, ist dessen Montage und insbesondere die Wartung äusserst einfach und ohne besondere Kenntnisse durchführbar.

Anspruch 2 definiert eine besonders bevorzugte Ausbildungsform des erfindungsgemässen Quetschventils, die eine einfache und platzsparende Renkverbindung erlaubt und bei der der Manschettenkörper keine, seine Stabilität beeinträchigenden Ausnehmungen aufweisen muss.

Eine besonders bevorzugte Ausbildungsform des erfindungsgemässen Quetschventils ist im Anspruch 3 angegeben. Die Befestigungshülse kann aus einem formstabilen Material, beispielsweise Metall oder Kunststoff hergestellt sein und versteift dadurch den Manschettenkörper im Befestigungsbereich, so dass jener seine Form unter allen Betriebsbedingungen dort beibehält.

Eine weitere, im Anspruch 4 definierte besonders bevorzugte Ausbildungsform des erfindungsgemässen Quetschventils ermöglicht eine besonders platzsparende Ausbildungsform. Die Vorsprünge können dabei in radialer Richtung gleich weit oder weiter vorstehen, als die am Manschettenkörper angeordneten Teile der Stützanordnung.

Eine weitere, die zuverlässig sichere Montage erlaubende, bevorzugte Ausbildungsform des Quetschventils ist im Anspruch 5 definiert.

Anspruch 6 gibt eine im Aufbau besonders einfache und platzsparende bevorzugte Ausbildungsform des erfindungsgemässen Quetschventils an.

Eine weitere besonders bevorzugte Ausbildungsform des erfindungsgemässen Quetschventils ist im Anspruch 7 definiert. Die Haltehülse kann aus einem äusserst formstabilen Material, beispielsweise Metall oder einem Kunststoff bestehen. Sie gewährleistet nicht nur einen sicheren Sitz der Manschette, sondern auch eine formstabile Haltung des Manschettenkörpers im Befestigungsbereich.

Bei einem ebenfalls bevorzugten Quetschventil, das die Merkmale des Anspruchs 8 aufweist, ist eine besonders stabile, grosse Kräfte aufnehmende, dauerhafte Verbindung des Manschettenkörpers mit der Haltehülse und/oder der Befestigungshülse gewährleistet.

Da in einer weiteren, besonders bevorzugten Ausbildungsform des erfindungsgemässen Quetschventils gemäss Anspruch 9 der Manschettenkörper selber Dichtfunktionen mit benachbarten Leitungsteilen aufnimmt, kann auf spezielle Dichtelemente verzichtet werden, was den Aufbau stark vereinfacht. Eine weitere, besonders bevorzugte Ausbildungsform des erfindungsgemässen Quetschventils ist im Anspruch 10 definiert. Sie erlaubt die Reduktion des Steuervolumens auf ein Minimum, was neben geringem Platzbedarf auch Energieeinsparungen mit sich zieht. Weiter ist der elastische Manschettenkörper unter Betriebsdruck grösstenteils vom Ventilgehäuse abgestützt, so dass seine mechanische Beanspruchung infolge äusserst kleiner Dehnung sehr klein und somit die Lebensdauer erheblich verlängert ist.

Die Ansprüche 11 und 12 definieren eine Manschette und ein Ventilgehäuse zu einem erfindungsgemässen Quetschventil.

Die vorliegende Erfindung wird nun anhand eines in der Figur gezeigten Ausführungsbeispiels näher beschrieben. Es zeigen rein schematisch:
- Fig. 1: in einem Längsschnitt entlang zwei zueinander rechtwinkligen Schnittebenen, die in der Fig. 2 mit I-I bezeichnet sind, ein erfindungsgemässes Quetschventil;
- Fig. 2: einen Querschnitt durch das erfindungsgemässe Quetschventil entlang einer in der Fig. 1 mit II-II angegbenen Schnittebene;
- Fig. 3: einen Längsschnitt durch eine Manschette des erfindungsgemässen Quetschventils;
- Fig. 4: einen Schnitt durch die in der Fig. 3 gezeigte Manschette entlang einer dort mit IV-IV bezeichneten Schnittebene;
- Fig. 5: im Längsschnitt eine Haltehülse;
- Fig. 6: in Ansicht die in der Fig. 5 gezeigte Haltehülse; und
- Fig. 7: eine Befestigungshülse in Ansicht.

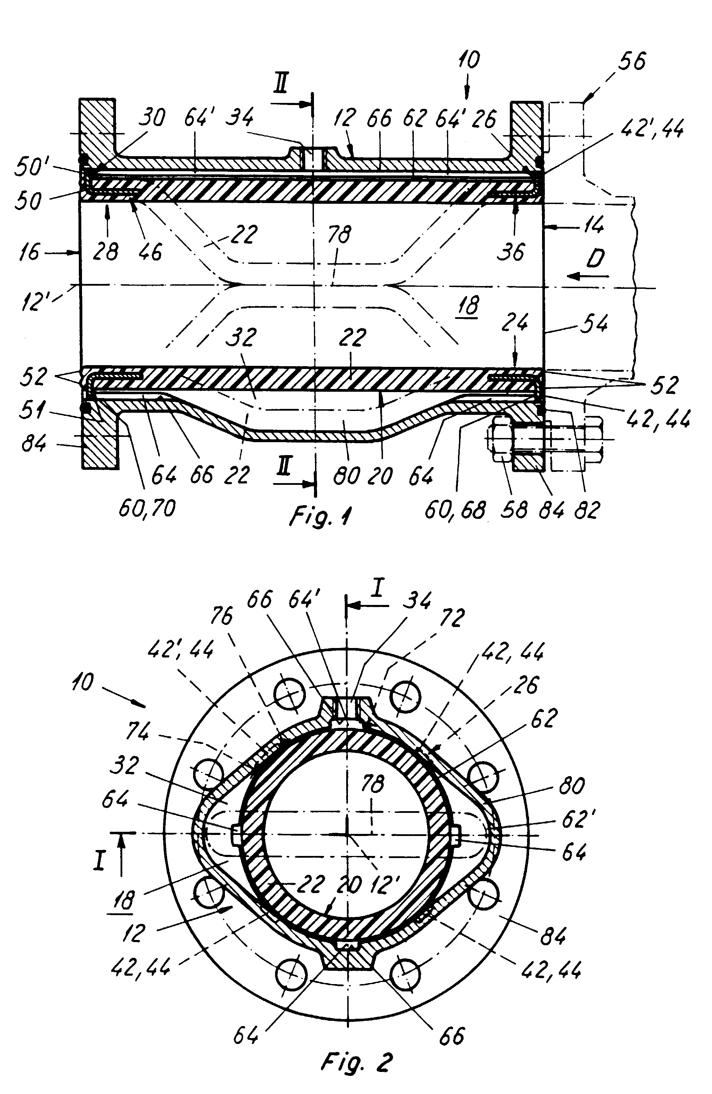

Das in den Fig. 1 und 2 gezeigte Schlauchquetschventil 10 weist ein rohrartiges Ventilgehäuse 12 auf, dessen Längsachse mit 12' bezeichnet ist. Auf der einen Stirnseite des Ventilgehäuses 12 ist ein Einlass 14 und auf der anderen ein Auslass 16 vorgesehen, die mittels eines in Axialrichtung verlaufenden Durchlasses 18 miteinander verbunden sind. In den Durchlass 18 ist eine Manschette 20 eingesetzt, die einen rohrartigen Manschettenkörper 22 im wesentlichen kreisrunden Querschnitts aus elastischem Material aufweist, der den Durchlass 18 über dessen gesamte Länge durchgreift. Der Manschettenkörper 22 ist in einem, dem Einlass 14 benachbarten ersten Befestigungsbereich 24 mittels einer Renkverbindung 26 und in einem, dem Auslass 16 benachbarten zweiten Befestigungsbereich 28 über eine Stützanordnung 30 am Ventilgehäuse 12 befestigt.

Ein mit 32 bezeichneter Steuerraum ist radial innen vom Manschettenkörper 22 und radial aussen vom Ventilgehäuse 12 begrenzt. Er ist durch eine Steueröffnung 34 im Ventilgehäuse 12 in allgemein bekannter Art und Weise mit einem Steuerventil verbunden.

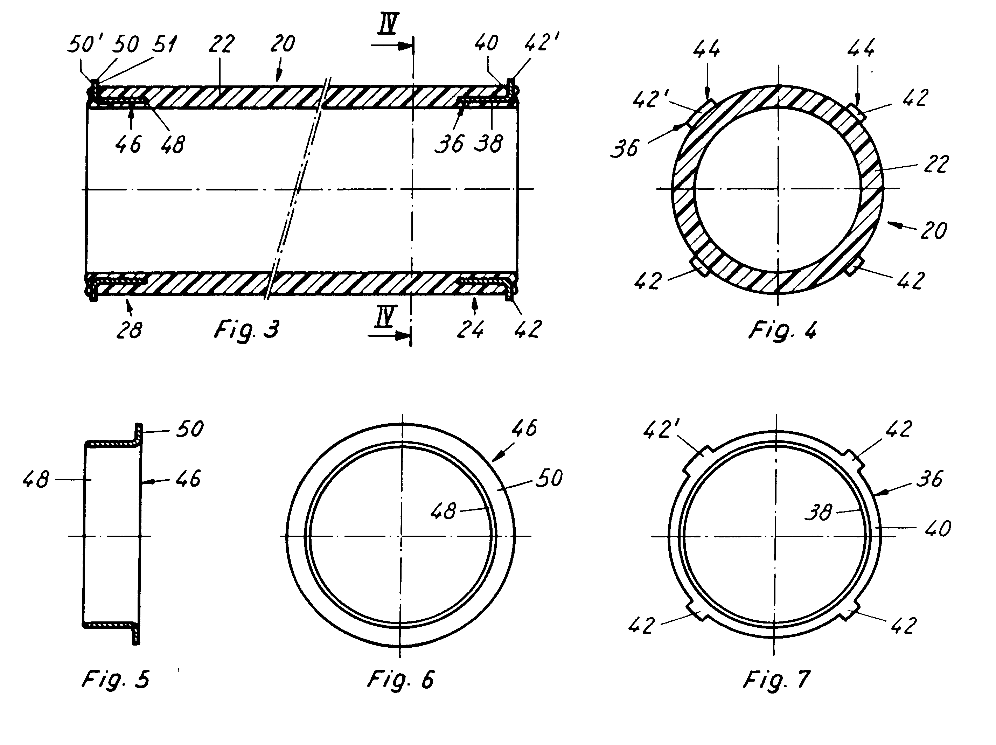

Unter Bezugnahme auf die Fig. 3 und 7 wird nun die Manschette 20 näher beschrieben. In einem Abschnitt, der dem einen axialen Ende des Manschettenkörpers 22 benachbart ist, ist in diesem eine Befestigungshülse 36 eingebettet, die aus einem formfesten Material, vorzugsweise einem Metall, wie Eisen oder Stahl, besteht. Die einstückige Befestigungshülse 36 weist einen in Umfangsrichtung in sich geschlossenen Zylinderteil 38 und am einen Ende einen an diesem angeformten bundartigen Ringteil 40 auf, von dem in radialer Richtung gegen aussen vier, in Umfangsrichtung gesehen um 90° versetzte Lappen 42 abstehen. Diese in einer rechtwinklig zur Längsachse 12' verlaufenden Ebene angeordneten Lappen 42 bilden in radialer Richtung gegen aussen über den Manschettenkörper 22 vorstehende Vorsprünge 44, wie insbesondere aus der Fig. 4 erkennbar ist. Der mit 42' bezeichnete Lappen ist in Umfangsrichtung gesehen breiter ausgebildet als die übrigen drei, gleiche Breite aufweisenden Lappen 42. Wie dies insbesondere aus der Fig. 3 erkennbar ist, sind der Zylinderteil 38 und der der Stirnseite des Manschettenkörpers 22 zugewandte Ringteil 40 vollständig vom elastischen Material des Manschettenkörpers 22 umgeben und mit diesem durch Vulkanisieren verbunden.

Die Fig. 5 und 6 zeigen eine Haltehülse 46, an deren zylinderförmigen Hülsenteil 48 einerends ein umlaufender Bund 50 angeformt ist. Der in radialer Richtung äussere Rand des Bundes 50 ist von der Längsachse 12' gleich weit entfernt wie das äussere Ende der Lappen 42,42'. Der Bund 50 steht somit in radialer Richtung gegen aussen mit einem Ringbereich 50' über den Manschettenkörper 22 vor und bildet ein Stützelement 51. Wie dies insbesondere Fig. 3 zeigt, ist die Haltehülse 46 in gleicher Art und Weise wie die Befestigungshülse 36 in den Manschettenkörper 22 eingebettet und von dessen Material allseitig, mit Ausnahme des Ringbereichs 50', umgeben. Durch Vulkanisieren ist eine besonders feste Verbindung zwischen der Haltehülse 46 und dem Manschettenkörper 22 gewährleistet.

An den beiden stirnseitigen Enden ist der Manschettenkörper 22 zu je zwei nebeneinander angeordneten, umlaufenden Dichtwülsten 52 geformt. Bei in das Ventilgehäuse 12 eingebauter Manschette 20 sind diese Dichtwülste 52 dazu bestimmt, an der Stirn 54 eines Rohres oder Geräteteils 56 anzuliegen, an dem das Ventilgehäuse 12 über eine Schraubenverbindung 58 befestigt ist und welches eine Zuleitung bzw. Wegführleitung für das Medium bildet, siehe Fig. 1.

In je einem an den Einlass 14 bzw. den Auslass 16 anschliessenden Endbereich weist der kreisförmige Querschnitt des Durchlasses 18 einen Durchmesser auf, der im wesentlichen dem grössten Durchmesser der Befestigungshülse 36 und der Haltehülse 46 entspricht. Dieser Endbereich ist in achsialer Richtung gegen das Innere des Ventilgehäuses 12 durch je eine umlaufende Schulter 60 begrenzt. Diese Schultern 60 führen zu einer stufenartigen Verkleinerung des Querschnitts des Durchlasses 18 auf einen Durchmesser, der geringfügig grösser ist als der Aussendurchmesser des Manschettenkörpers 22. Zwischen dem Ventilgehäuse 12 und dem Manschettenkörper 22 verbleibt ein Spalt 62, der in radialer Richtung gemessen kleiner ist als das Mass, mit welchem die Lappen 42 der Befestigungshülse 36 und der Ringbereich 50' der Haltehülse 46 über den Manschettenkörper 22 vorstehen. Dieser Spalt 62 ist Teil des Steuerraumes 32.

Am Ventilgehäuse 12 sind in Richtung der Längsachse 12' verlaufende und gegen den Durchlass 18 hin offene Nuten 64,64' ausgenommen, die um 90° versetzt angeordnet sind. Der Boden 66 der Nuten 64,64' fluchtet im wesentlichen mit der Mantelfläche des Durchlasses 18 in den an den Einlass 14 und Auslass 16 angrenzenden Endbereichen. In Umfangsrichtung gesehen sind die Nuten 64 und die Nut 64' geringfügig breiter ausgebildet als die Lappen 42 bzw. der Lappen 42'. Auf jeden Fall ist die Breite der Nuten 64 kleiner als jene des Lappens 42'. Durch die Ausbildung der Nuten 64,64' in dieser Art, ist das lagegerechte Einführen der Manschette 20, mit der der Befestigungshülse 36 benachbarten Stirnseite voraus, in den Durchlass 18 des Ventilgehäuses 12 gewährleistet.

Die dem Einlass 14 benachbarte Schulter 60 bildet in Umfangsrichtung gesehen zwischen den Nuten 64,64' eine Haltefläche 68 und desgleichen bildet die dem Auslass 16 benachbarte Schulter 60 eine Stützfläche 70. Die Haltefläche 68 und die Stützfläche 70 liegen in rechtwinklig zur Längsachse 12' verlaufenden Ebenen und sind voneinander mindestens annähernd gleich weit beabstandet wie die Lappen 42 und der Bund 50.

Bei der Montage der Manschette 20 kann diese somit in Richtung der Längsachse 12' soweit in den Durchlass 18 eingeschoben werden, bis der Ringbereich 50' des Bundes 50 an der Stützfläche 70 anliegt. Beim anschliessenden Drehen der Manschette 20 um die Längsachse 12', um vorzugsweise 45°, hintergreifen dann die Lappen 42 die Haltefläche 68, wodurch die Manschette 20 am Ventilgehäuse 12 befestigt ist, und zwar einlasseitig 14 mittels einer durch die Lappen 42 bzw. Vorsprünge 44 und die Haltefläche 68 gebildeten Renkverbindung 26 und auslasseitig mittels der durch die Stützfläche 70 und den Ringbereich 50' der Haltehülse 46, bzw. das Stützelement 51 gebildeten Stützanordnung 30.

Einlasseitig ist in das Ventilgehäuse 12 ein Schwerspannstift 72 eingesetzt, der in axialer Richtung über die Haltefläche 68 vorsteht und als Anschlag für den Lappen 42' dient. Da der Schwerspannstift 72 benachbart zur Nut 64' angeordnet ist, erlaubt er, wie aus der Fig. 2 erkennbar, bei der Montage das Drehen der Manschette 20 ausschliesslich im Gegenuhrzeigersinn. Diese Drehbewegung ist mittels eines weiteren Schwerspannstifts 74 begrenzt, der ebenfalls in das Ventilgehäuse 12 eingesetzt ist und in axialer Richtung über die Haltefläche 68 vorsteht. Steht der Lappen 42' am weiteren Schwerspannstift 74 an, wird auf der diesem abgewandten Seite des Lappens 42' ein Verriegelungsstift 76 in eine entsprechende, im Ventilgehäuse 12 in axialer Richtung angebrachte Bohrung eingesetzt, so dass die Manschette 20 nun durch den weiteren Schwerspannstift 74 urid den Verriegelungsstift 76 in einer definierten, in der Fig. 2 gezeigten Drehlage gehalten ist. Für das Auswechseln der Manschette 20 braucht einzig der Verriegelungsstift 76 entfernt zu werden, so dass durch Drehen der Manschette 20 im Uhrzeigersinn die Lappen 42 und 42' in Flucht mit den entsprechenden Nuten 64,64' gebracht werden können, um die Manschette 20 dann in axialer Richtung, mit dem der Haltehülse 46 benachbarten Ende voraus, aus dem Ventilgehäuse 12 zu entfernen.

Vor der Montage werden die Manschettenkörper 22 in einer definierten Richtung in eine Quetschebene 78 zusammengepresst. Im Betrieb verformen sich dann die Manschettenkörper 22 aus ihrer runden Ruhelage immer in derselben Richtung. Diese Eigenschaft ermöglicht nun das Volumen des Steuerraumes 32 möglichst klein zu halten, indem der Querschnitt des Durchlasses 18 ausschliesslich im Quetschbereich des Manschettenkörpers 22, d.h. in einem Mittelbereich zwischen den beiden Befestigungsbereichen 24 und 28 derart vergrössert wird, dass die lichte Weite des Durchlasses 18, in der Quetschebene 78 gemessen, geringfügig grösser ist als die grösste Breite des Manschettenkörpers 22 in dieser Ebene. Vorteilhafterweise verbleibt zwischen der Innenwand des Ventilgehäuses 12 und dem zusammengequetschten Manschettenkörper 22 ein Spalt 62', dessen Breite in etwa jener des Spaltes 62 entspricht. Das im wesentlichen rohrartige Ventilgehäuse 12 weist deshalb im Mittelbereich an einander gegenüberliegenden Seiten Ausbauchungen 80 auf. In den Fig. 1 und 2 ist der zusammengequetschte Manschettenkörper 22 strichpunktiert angedeutet.

Da aufgrund der unterschiedlichen Lappen 42,42' und der Vorkehrungen am Ventilgehäuse 12, Nuten 64 und 64', Schwerspannstifte 72,74 und Verriegelungsstift 76, die Einbaulage der Manschette genau vorgegeben ist, kann diese auch in richtiger Richtung vor der Montage zusammengequetscht werden.

Stirnseitig wird der Steuerraum 32 durch die Stirn 54 der am Ventilgehäuse 12 zu befestigenden Rohr- bzw. Geräteteile 56 begrenzt. Radial innen liegt die Stirn 54 dichtend an Dichtwulsten 52 des Manschettenkörpers 22 und radial aussen an einem Dichtungsring 82 an, der in eine um den Einlass 14 bzw. Auslass 16 herum verlaufende Nut im Ventilgehäuse 12 eingelegt ist.

Solange der Druck im Steuerraum 32 kleiner oder gleich dem Druck des im Manschettenkörper 22 vorhandenen Mediums ist, behält der Manschettenkörper 22 die in den Fig. 1 und 2 mit ausgezogenen Linien dargestellte Lage bei, oder legt sich mit Ausnahme im Bereich der Ausbauchungen 80 und der Nuten 64,64' an die Innenwand des Ventilgehäuses 12 an. Grosse Drücke des Mediums können dazu führen, dass sich der Manschettenkörper 22 im Bereich der Ausbauchungen 80 etwas dehnt. Da aber der Manschettenkörper 22 grösstenteils vom Ventilgehäuse 12 abgestützt ist, führt diese Dehnung zu nur kleiner Beanspruchung des Manschettenkörpers 22.

Ist der Fluss des Mediums zu unterbrechen, wird der Steuerraum 32 unter einem bezüglich dem Druck des Mediums bestimmten Ueberdruck gesetzt, wodurch der Manschettenkörper 22 vollständig in die Quetschebene 78 zusammengequetscht wird. Er schliesst dabei gasdicht ab, Festkörper, die sich im Quetschbereich befinden, werden durch den hochelastischen Manschettenkörper 22 eingeschlossen. Wird der Druck im Steuerraum 32 wieder auf oder unter den Druck des Mediums verkleinert, gibt der Manschettenkörper 22 den vollen Querschnitt wieder frei. Es ist einzusehen, dass durch Wahl des Drucks im Steuerraum 32 auch ein Dosieren des Mediums ermöglicht ist.

Wie insbesondere aus der Fig. 1 hervorgeht, kommt das Medium im Quetschventil 10 ausschliesslich mit der inneren Mantelfläche des Manschettenkörpers 22 in Berührung. Es genügt deshalb, dass gegebenenfalls der Manschettenkörper radial innen eine auf das Medium abgestimmte Schutzschicht aufweist; der übrige Teil des Manschettenkörpers 22 kann immer aus demselben Material bestehen und denselben Aufbau aufweisen.

Als Steuermedium kann Druckluft, Wasser, Oel oder dergleichen verwendet werden.

Wie aus den Fig. 1 und 2 hervorgeht, weist das Ventilgehäuse 12 beiderends äussere Befestigungsflansche 84 auf. Es ist selbstverständlich auch möglich, das Ventilgehäuse 12 auf andere Art und Weise, beispielsweise über eine Gewindeverbindung mit den benachbarten Teilen zu verbinden.

Selbstverständlich können mehr oder weniger als vier Lappen 42,42' bzw. Vorsprünge 44 und entsprechende Nuten 64,64' vorgesehen werden. Es ist auch denkbar, um die Drehlage der Manschette 20 bei der Montage festzulegen, die Lappen 42,42' bzw. Vorsprünge 44 und die entsprechenden Nuten 64,64', in Umfangsrichtung gesehen, unregelmassig zu verteilen. In diesem Fall könnten alle Lappen und Nuten dieselbe Breite aufweisen.

Es ist auch denkbar, am Manschettenkörper 22 selber nockenartige Vorsprünge 44 anzuformen, die die Funktion der Lappen 42,42' übernehmen. Desgleichen ist es denkbar, am Manschettenkörper 22 selber ein Stützelement 51, beispielsweise einen umlaufenden Wulst anzuformen, das die Funktion des Ringbereichs 50' übernimmt.

Die Begriffe Einlass 14 und Auslass 16 sind nicht derart zu verstehen, dass das Medium nur von der Einlasseite her das Quetschventil 10 durchströmen kann. Es ist selbstverständlich auch möglich, dass das Medium in der Strömungsrichtung D entgegengesetzter Richtung strömt, so dass der Einlass 14 zum Auslass und der Auslass 16 zum Einlass wird.

Es ist auch denkbar, die Haltehülse 46 gleich auszubilden wie die Befestigungshülse 36, nämlich mit vorstehenden Lappen. In diesem Fall ist es von Vorteil, die beiden Hülsen um einen bestimmten Winkel gegeneinander verdreht anzuordnen, so dass beim Einfahren der Manschette 20 die Lappen der Haltehülse an der Stützfläche 70 zur Anlage kommen und beim Drehen der eingesetzten Manschette 20 an der Stützfläche 70 in Anlage bleiben.

Wie aus Fig. 1 erkennbar ist, wirken bei Ueberdruck im Steuerraum 32 auf deri zusammengequetschten Manschettenkörper 22 in Richtung der Längsachse 12' wirkende Kräfte, die der durch das Zusammenquetschen verursachten Zugkraft auf die Befestigungs- und Haltehülsen 36,46 entgegenwirken. Weiter presst dieser Ueberdruck in radialer Richtung den Manschettenkörper 22 gegen die Befestigungs- und Haltehülsen 36,46 im Bereich deren Ueberlappung. Die erstgenannten Kräfte vermindern die Beanspruchung der Verbindung zwischen dem Manschettenkörper 22 und der Befestigungs- bzw. Haltehülse 36,46 und die zweite Kraft unterstützt diese Verbindung.

Es ist auch möglich, die Befestigungs- und Haltehülsen 36,46 auf andere Art und Weise mit dem Manschettenkörper 22 zu verbinden. So ist es denkbar, in diesen Hülsen Durchgangslöcher vorzusehen, die vom Material des Manschettenkörpers 22 durchgriffen werden.

## Patentansprüche

1. Quetschventil mit einem Ventilgehäuse (12), das einen Einlass (14), einen Auslass (16) und einen diese miteinander verbindenden Durchlass (18) aufweist, einer im Durchlass (18) angeordneten, einen Manschettenkörper (22) aus elastischem Material aufweisenden Manschette (20), die dazu bestimmt ist, von einem vom Einlass (14) zum Auslass (16) oder umgekehrt strömenden Medium durchströmt zu werden, Mitteln zum Befestigen des Manschettenkörpers (22) am Ventilgehäuse (12) in zwei, in Längsrichtung des Durchlasses (18) gesehen, voneinander beabstandeten Befestigungsbereichen (24,28), und einem vom Ventilgehäuse (12) und dem Manschettenkörper (22) begrenzten Steuerraum (32), der zum Zusammenquetschen des Manschettenkörpers (22) zwischen den beiden Befestigungsbereichen (24,28) bezüglich dem Druck des Mediums unter Ueberdruck setzbar ist, dadurch gekennzeichnet, dass der Manschettenkörper (22) im einen ersten Befestigungsbereich (24) über eine Renkverbindung (26) und im andern zweiten Befestigungsbereich (28) über eine Stützanordnung (30) am Ventilgehäuse (12) befestigt ist, wobei die Renkverbindung (28) und die Stützanordnung (30) nur in entgegengesetzten, voneinander weg zeigenden Richtungen zum Halten der Manschette (20) in axialer Richtung wirksam sind.

2. Quetschventil nach Anspruch 1, dadurch gekennzeichnet, dass am Manschettenkörper (22) in Umfangsrichtung voneinander beabstandete und in radialer Richtung gegen aussen abstehende Vorsprünge (44) angeordnet sind, urid das Ventilgehäuse (12) im ersten Befestigungsbereich (24) eine zum Zusammenwirken mit diesen bestimmte Haltefläche (68) aufweist, die nach dem Einführen der Manschette (20) in den Durchlass (18), vorzugsweise durch Drehen der Manschette (20), von den Vorsprüngen (44) hinterfahrbar ist.

3. Quetschventil nach Anspruch 2, gekennzeichnet durch eine in deri Manschettenkörper (22) eingebettete Befestigungshülse (36) mit die Vorsprünge (44) bildenden Lappen (42,42').

4. Quetschventil nach Anspruch 2 oder 3, dadurch gekennzeichnet, dass das Ventilgehäuse (12) in Längsrichtung des Durchlasses (18) verlaufende, nutförmige Ausnehmungen (64,64') aufweist, durch die die Vorsprünge (44) oder Lappen (42,42') beim Einführen der Manschette (20) in den Durchlass (18) hindurchbewegbar sind, und die Haltefläche (68), in Umfangsrichtung gesehen, zwischen den Ausnehmungen (64,64') angeordnet ist.

5. Quetschventil nach Anspruch 4, dadurch gekennzeichnet, dass Vorsprünge (44) oder Lappen (42,42') und die entsprechenden Ausnehmungen (64,64') unterschiedlich ausgebildet sind, vorzugsweise in Umfangsrichtung unterschiedliche Ausdehnung aufweisen, um die Drehlage der Manschette (20) bezüglich des Ventilgehäuses (12) beim Einführen der Manschette (20) festzulegen.

6. Quetschventil nach einem der Ansprüche 1 bis 5, dadurch gekennzeichnet, dass die Stützanordnung (30) ein am Manschettenkörper (22) angeordnetes, in radialer Richtung gegen aussen vorstehendes Stützelement (51) und eine am Ventilgehäuse (12) angeformte, zum Zusammenwirken mit diesem Stützelement (51) bestimmte Stützfläche (70) aufweist.

7. Quetschventil nach Anspruch 6, dadurch gekennzeichnet, dass das Stützelement (51) von einem umlaufenden Bund (50) einer in den Manschettenkörper (22) eingebetteten Haltehülse (46) gebildet ist.

8. Quetschventil nach Anspruch 3 oder 7, dadurch gekennzeichnet, dass die Haltehülse (46) und / oder die Befestigungshülse (36) in den Manschettenkörper (22) einvulkanisiert sind.

9. Quetschventil nach einem der Ansprüche 1 bis 8, dadurch gekennzeichnet, dass der Manschettenkörper (22) den Durchlass (18) durchgreift und an den Stirnseiten je eine Dichtfläche (52) aufweist, die dazu bestimmt ist, mit der Stirn (54) eines am Ventilgehäuse (12) zu befestigenden Leitungsteils (56) zusammenzuwirken.

10. Quetschventil nach einem der Ansprüche 1 bis 9, dadurch gekennzeichnet, dass der Durchlass (18) in den Befestigungsbereichen (24,28) einen im wesentlichen kreisrunden und in einem Abschnitt zwischen den Befestigungsbereichen (24,28) ein ovalen Querschnitt aufweist, urid die Manschette (20) mittels einer Verdrehsicherung (74,76) in einer derartigen Drehlage im Ventilgehäuse (12) haltbar ist, dass ihre Quetschebene (78) mindestens annähernd mit der grössten Ausdehnung des ovalen Querschnitts zusammenfällt.

11. Manschette zu einem Quetschventil nach Anspruch 1, mit einem Manschettenkörper (22) aus elastischem Material, an dem in einem ersten Befestigungsbereich (24) zum Erzeugen einer Renkverbindung (26) mit einem Ventilgehäuse (12) bestimmte Vorsprünge (44) und in einem in Längsrichtung beabstandeten zweiten Befestigungsbereich ein Stützelement (51) angeordnet sind.

12. Ventilgehäuse zu einem Quetschventil nach Anspruch 1, mit einem Einlass (14), einem Auslass (16) und einem diese miteinander verbindenden Durchlass (18), einer in einem ersten Befestigungsbereich (24) angeordneten, zum Erzeugen einer Renkverbiridung (26) mit einer im Durchlass (18) angeordneten Manschette (22) bestimmten Haltefläche (68) und einer in einem in Längsrichtung beabstandeten zweiten Befestigungsbereich (28) angeordneten Stützfläche (70).

## Claims

1. A pinch valve with a valve housing (12) comprising an inlet (14), an outlet (16) and a through-way (18) connecting these with each other, and with, disposed in the through-way (18), a sleeve member (22) of resilient material, the intention of which is to convey a flow of medium from the inlet (14) to the outlet (16) or vice versa means of fixing the sleeve member (22) on the valve housing (12) in, viewed in the longitudinal direction of the through-way (18), two spaced apart fixing zones (24, 28) and, bounded by the valve housing (12) and the sleeve member (22), a control space (32) which, for pinching the sleeve member (22) together between the two fixing zones (24, 28), can be exposed to an excess pressure in relation to the pressure of the medium, characterised in that the sleeve member (22) is fixed to the valve housing (12) via a bayonet connection (26) in a first fixing zone (24) and via a bracing arrangement (30) in the other and second fixing zone (28), the bayonet connection (26) and the bracing arrangement (30) being only operative in opposite directions winch are directed away from each other for supporting the sleeve (20) in an axial direction.

2. A pinch valve according to claim 1, characerised in that projections (44) which are spaced apart from each other in the peripheral direction and which project outwardly in a radial direction and in that the valve housing (12) has in the frist fixing zone (24) a holding surface (68) intended to co-operate with them and which, after insertion of the sleeve (20) into the through-way (18), preferably by rotation of the sleeve (20), can be backed by the projections (44).

3. A pinch valve according to claim 2, characterised by the fixing sleeve (36) embedded into the sleeve member (22) and with lugs (42, 42') which form the projections (44).

4. A pinch valve according to one of claims 2 or 3, characterised in that the valve housing (12) comprises, exending in the longitudinal direction of the through-way (18), groove-like recesses (64, 64') by which the projections (44) or lugs (42, 42') can be moved when the sleeve (20) is inserted into the through-way (18) and in that the holding surface (68), viewed in the peripheral direction, is disposed between the recesses (64,64').

5. A pinch valve according to claim 4, characterised in that projections (44) or lugs (42, 42') and the corresponding recesses (64,64') are of different constructions, their extension varying preferably in the peripheral direction, in order to fix the rotated position of the sleeve (20) in relation to the valve body (12) upon insertion of the sleeve (20).

6. A pinch valve according to one of claims 1 to 5, characterised in that the bracing arrangement (30) comprises, disposed on the sleeve member (22), a bracing element (51) projecting outwardly in a radial direction and, integrally formed on the valve housing (12), a bracing surface (70) intended to co-operate with this bracing element (51).

7. A pinch valve according to claim 6, characterised in that the bracing element (51) is formed by an encircling collar (50) on a retaining sleeve (46) embedded into the sleeve member (22).

8. A pinch valve according to claim 3 or 7, characterized in that the retaining sleeve (46) and/or the fixing sleeve (36) are vulcanised into the sleeve member (22).

9. A pinch valve according to one of claims 1 to 8, charcterised in that the sleeve member (22) passes through the through-way (18) and has on each end face a sealing surface (52) the purpose of which is to co-operate with the face (54) of a conduit part (56) which is to be mounted on the valve housing (12).

10. A pinch valve according to one of claims 1 to 9, characterised in that the throughway (18) has a substantially circular cross-section in the fixing zones (24, 28) and an oval cross-section in a portion between the fixing zones (24, 28) and in that the sleeve (20) can be secured by means of a rotational locking means (74, 76) in such a rotated position in the valve housing (12) that its pinch plane (78) at least approximately coincides with the maximum extension of the oval cross-section.

11. A sleeve for a pinch valve according to claim 1 with a sleeve member (22) of resilient material and on which there are, in a first fixing zone (24), projections (44) intended to create a bayonet connection (26) with a valve housing (12) and in that there is a bracing element (51) disposed in a second fixing zone which is at a distance from the first in a longitudinal direction.

12. A valve housing for a pinch valve according to claim 1, with an inlet (14), an outlet (16) and, connecting these to each other, a through-way (18), a holding surface (68) intended to create a bayonet connection (26) with a sleeve (22) disposed in the through-way (18) and a bracing surface (70) disposed in a second fixing zone (28) which is at a distance therefrom in a longitudinal direction.

## Revendications

1. Robinet à manchon déformable avec une enveloppe de robinet (12) qui présente une entrée (14), une sortie (16) et un passage (18) qui relie celles-ci entre elles, un manchon (20) disposé dans le passage (18) et présentant un corps de manchon (22) en matériau élastique, qui est défini pour être traversé par un milieu s'écoulant de l'entrée (14) vers la sortie (16) ou inversement, des moyens pour fixer le corps de manchon (22) sur l'enveloppe de robinet (12) dans deux zones de fixation (24, 28) éloignées l'une de l'autre vu dans le sens longitudinal du passage (18), et un espace de commande (32) délimité par l'enveloppe de robinet (12) et le corps de manchon (22), qui peut être mis en surpression par rapport à la pression du milieu pour comprimer le corps de manchon (22) entre les deux zones de fixation (24, 28), caractérisé en ce que le corps de manchon (22) est fixé à l'enveloppe de robinet (12) dans une première zone de fixation (24) par l'intermédiaire d'une liaison à baïonnette (26) et dans une seconde zone de fixation (28) par l'intermédiaire d'une disposition d'appui (30), la liaison à baïonnette (28) et la disposition d'appui (30) n'étant efficaces pour maintenir le manchon (20) dans le sens axial que dans des directions opposées, détournées l'une de l'autre.

2. Robinet à manchon déformable selon la revendication 1, caractérisé en ce que des saillies (44) éloignées les unes des autres dans le sens périphérique et reposant contre l'extérieur dans le sens radial sont disposées sur le corps de manchon (22), et l'enveloppe de robinet (12) présente dans la première zone de fixation (24) une surface de retenue (68) définie pour agir conjointement avec celles-ci, derrière laquelle les saillies (44) peuvent être insérées après l'introduction du manchon (20) dans le passage (18), de préférence par rotation du manchon (20).

3. Robinet à manchon déformable selon la revendication 2, caractérisé par une douille de fixation (36) enrobée dans le corps de manchon (22) avec des pattes (42, 42') formant les saillies (44).

4. Robinet à manchon déformable selon la revendication 2 ou 3, caractérisé en ce que l'enveloppe de robinet (12) présente des évidements (64, 64') en forme de rainures s'étendant dans le sens longitudinal du passage (18), dans lesquels les saillies (44) ou pattes (42, 42') peuvent être déplacées lors de l'introduction du manchon (20) dans le passage (18), et la surface de retenue (68), vue dans le sens périphérique, est disposée entre les évidements (64, 64').

5. Robinet à manchon déformable selon la revendication 4, caractérisé en ce que les saillies (44) ou pattes (42, 42') et les évidements correspondants (64, 64') sont formés de façon différente, présentent de préférence une dimension différente dans le sens périphérique, afin de définir la position de rotation du manchon (20) par rapport à l'enveloppe de robinet (12) lors de l'introduction du manchon (20).

6. Robinet à manchon déformable selon l'une des revendications 1 à 5, caractérisé en ce que la disposition d'appui (30) présente un élément d'appui (51) disposé sur le corps de manchon (22) et faisant saillie contre l'extérieur dans le sens radial et une surface d'appui (70) formée sur l'enveloppe de robinet (12) et définie pour agir conjointement avec cet élément d'appui (51).

7. Robinet à manchon déformable selon la revendication 6, caractérisé en ce que l'élément d'appui (51) est formé par une nervure (50) faisant le tour d'une douille de retenue (46) enrobée dans le corps de manchon (22).

8. Robinet à manchon déformable selon la revendication 3 ou 7, caractérisé en ce que la douille de retenue (46) et/ou la douille de fixation (36) sont vulcanisées dans le corps de manchon (22).

9. Robinet à manchon déformable selon l'une des revendications 1 à 8, caractérisé en ce que le corps de manchon (22) pénètre dans le passage (18) et présente à chaque bout une surface d'étanchéité (52), qui est définie pour agir avec la partie frontale (54) d'une partie de conduite (56) à fixer sur l'enveloppe de robinet (12).

10. Robinet à manchon déformable selon l'une des revendications 1 à 9, caractérisé en ce que le passage (18) présente dans les zones de fixation (24, 28) une section transversale essentiellement circulaire et dans une section entre les zones de fixation (24, 28) une section transversale ovale, et le manchon (20) peut être tenu dans l'enveloppe de robinet (12) au moyen d'un blocage par torsion (74, 76) dans une position de rotation telle que son plan de compression (78) coïncide au moins approximativement avec la plus grande dimension de la section transversale ovale.

11. Manchon pour un robinet à manchon déformable selon la revendication 1 avec un corps de manchon (22) en matériau élastique sur lequel sont disposés dans une première zone de fixation (24), des saillies (44) définies pour créer une liaison à baïonnette (26) avec une enveloppe de robinet (12) et, dans une seconde zone de fixation éloignée dans le sens longitudinal, un élément d'appui (51).

12. Enveloppe de robinet pour un robinet à manchon déformable selon la revendication 1, avec une entrée (14), une sortie (16) et un passage (18) reliant celles-ci entre elles, une surface de retenue (68) disposée dans une première zone de fixation (24) et définie pour créer une liaison à baïonnette (26) avec un manchon (22) disposé dans le passage (18) et une surface d'appui (70) disposée dans une seconde zone de fixation (28) éloignée dans le sens longitudinal.
